# EUROPEAN PATENT APPLICATION

(11) **EP 1 762 733 A1**
(43) Date of publication of application: **14.03.2007**
(21) Application number: 06018760.6
(22) Date of filing: 07.09.2006
(51) Int. Cl.: F16C 19/18, F16C 33/58, B60B 27/00

(54) **Rolling element bearing assembly for a wheel hub unit with a conical cavity in the inner bearing part**

(30) Priority: 09.09.2005 JP 2005261594
(71) Applicant: JTEKT Corporation, Chuo-ku, Osaka-shi Osaka 542-8502 (JP)
(72) Inventor: Takada, Yoshito, Osaka-shi, Osaka 542-8502 (JP); Yu, Changxin, Osaka-shi, Osaka 542-8502 (JP); Nagata, Syuuji, Osaka-shi, Osaka 542-8502 (JP); Inoue, Shigeru, Osaka-shi, Osaka 542-8502 (JP)
(74) Representative: Steinmeister, Helmut

(57) **Abstract**

A rotating side raceway member (3) has a solid portion (8), and a concave portion (14) for weight saving is provided on an end surface of the solid portion (8). The concave portion is formed in such a manner that a surface (16) intersecting a direction of a contact angle (α) of a rolling element forms a conical surface (16) having a predetermined angle (β) with respect to an axial direction.

## Description

### BACKGROUND OF THE INVENTION

The invention relates to a rolling bearing apparatus which is preferably used as a hub unit for a driven wheel of a motor vehicle.

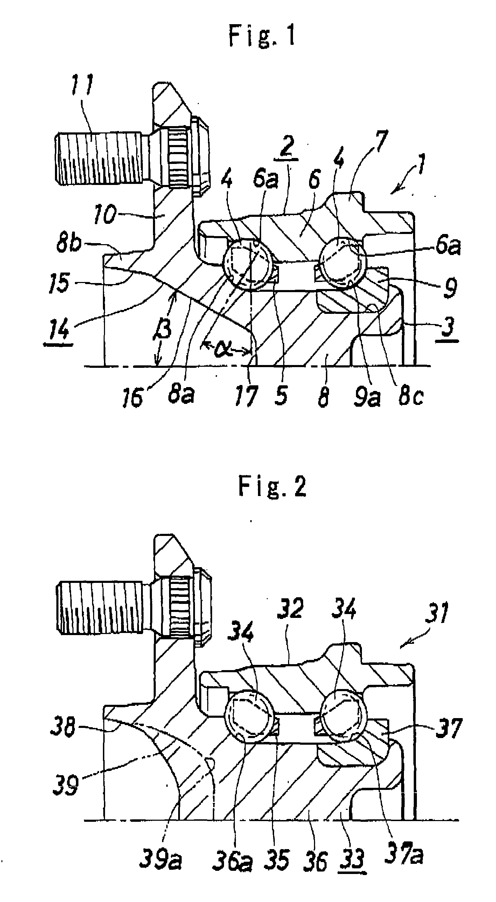

A rolling bearing apparatus 31 used as a hub unit for a driven wheel of a motor vehicle is provided with a fixed side raceway member 32 doubling as an outer ring of a rolling bearing, a rotating side raceway member 33 doubling as an inner ring of the rolling bearing, two rows of balls 34 arranged between both the meters 32 and 33 so as to form a predetermined contact angle, and a cage 35 holding each of the rows of balls 34, for example, as shown in Fig. 2. The fixed side raceway member 32 is attached to a vehicle body side suspension apparatus, and a wheel is attached to the rotating side raceway member 33. The rotating side raceway member 33 is constituted by a solid inner shaft 36 having a first inner ring raceway groove 36a, and an inner ring 37 having a second inner ring raceway groove 37a and fitted to the inner shaft 36, and is provided with a concave portion 38 having an approximately semicircular cross sectional shape for weight saving on an outer end surface in an axial direction of the solid inner shaft 36.

In Japanese Unexamined Patent Publication No. 2005-145313, there has been proposed a matter that weight saving of a rolling bearing apparatus is achieved by enlarging the concave portion mentioned above.

In order to achieve weight saving, it is necessary to enlarge the concave portion 38 shown by a solid line in Fig. 2 as shown by a two-dot chain line 39 in the drawing, however, in this case, there is generated a problem that an R portion (39a) of the concave portion 39 shown by the two-dot chain line just faces to an R portion of the inner ring raceway groove 36a, a stress is concentrated to this portion, and a strength is lowered. It becomes extremely hard to intend weight saving while avoiding the stress concentration.

### SUMMARY OF THE INVENTION

An object of the invention is to provide a rolling bearing apparatus which can achieve weight saving while avoiding a stress concentration.

In accordance with the invention, there is provided a rolling bearing apparatus including: a fixed side raceway member; a rotating side raceway member; and rolling elements arranged between both the members so as to form a predetermined contact angle; wherein the rotating side raceway member has a solid portion; a concave portion for weight saving is provided on an end surface of the solid portion, and the concave portion is formed such that a surface intersecting a direction of a contact angle of the rolling element forms a conical surface.

The fixed side raceway member is formed as an outer ring of the rolling bearing, and the rotating side raceway member is formed as an inner ring of the rolling bearing. The rolling elements are generally arranged in two rows, and two outer ring raceway grooves are formed on an inner periphery of the fixed aide raceway member. Further, the rotating side raceway member is generally constituted by an inner shaft corresponding to the solid portion and an inner ring fixed to one half-portion of the inner shaft, and an inner ring raceway groove is formed on each of the inner ring and the other half-portion of the solid portion.

The rotating side raceway member is formed by carbon steel such as S55C, S65C, and the concave portion is formed, for example, by forging. However, the raw material of the rotating side raceway member and the working method of the concave portion are not limited to them.

It is preferable that the conical surface of the concave portion is formed so as to be tapered toward an inner side in an axial direction, and a bottom surface (an innermost side position in the axial direction) of the concave portion is positioned on the inner side in the axial direction than the rolling elements on an outer side in the axial direction.

The rolling bearing is constituted, for example, by an angular contact ball bearing, and a contact angle α of the rolling element (ball) is set about 30 to 45 degrees.

It is preferable that an angle β (degree) formed by the conical surface with respect to an axial direction is set to a range, a contact angle (an angle with respect to a line orthogonal to the axial direction) of the rolling element being set to α (degree), (α - 20 degrees) ≤ β ≤ (α + 10 degrees). In other words, it is preferable that the conical surface is orthogonal to the contact angle (β = α) or as close as possible to be orthogonal, and it is preferable that the angle formed by the conical surface with respect to the axial direction is at least in a range of the contact angle of the rolling element, - 20 degrees to + 10 degrees, If the angle β is smaller than (α - 20 degrees) it is hard to secure a strength, If the angle β is larger than (α + 10 degrees), it is impossible to sufficiently obtain an effect of weight saving. The angle β formed by the conical surface with respect to the axial direction is more preferably set in a range (α -15 degrees) ≤ β ≤ (α + 5 degrees).

The rolling bearing apparatus is preferably used as a hub unit for a driven wheel of a motor vehicle (a rear wheel of a front-wheel-drive vehicle or a front wheel of a rear-wheel-drive vehicle). In this case, a flange portion through which bolts for fixing the hub unit to a vehicle body are inserted is formed on the fixed side raceway member, and a flange portion to which bolts for attaching the wheel are fixed is formed on the rotating side raceway member. Further, the rotating side raceway member constituted by the solid inner shaft and the annular inner ring is attached to the vehicle such that the inner ring is set on the inner side in a state where the concave portion is formed on the outer end surface in the axial direction of the inner shaft.

In accordance with the rolling bearing apparatus of the invention, since the concave portion for weight saving is formed such that the surface intersecting the direction of the contact angle of the rolling body forms the conical surface, it is possible to avoid the stress concentration generated by the R portion of the concave portion and the R portion of the inner ring raceway groove facing with each other, and it is possible to achieve weight saving while keeping the strength.

### BRIEF DESCRIPTION OF THE DRAWINGS

Fig. 1 is a vertical cross sectional view showing an embodiment of a rolling bearing apparatus in accordance with the invention; and
Fig. 2 is a vertical cross sectional view showing a conventional rolling bearing apparatus.

### DETAILED DESCRIPTION OF THE PREFERRED EMBODIMENT

A description will be given below of an embodiment in accordance with the invention with reference to the accompanying drawings.

Fig. 1 shows an embodiment of a rolling bearing apparatus in accordance with the invention. In the following description, right and left mean right and left in Fig. 1. In this case, a left side shows an outer side of a vehicle, and a right side shows an inner side of the vehicle.

A rolling bearing apparatus 1 is used as a hub unit for a driven wheel of a motor vehicle, and is provided with a fixed side raceway member 2 fixed to a vehicle body side, a rotating side raceway member 3 to which a wheel is attached, balls 4 corresponding to a plurality of rolling elements arranged in two rows between both the members 2 and 3, and a cage 5 holding the balls 4 in each of the rows.

A type of the bearing is constituted by a double row angular ball bearing, and the balls 4 are arranged between the fixed side raceway member 2 corresponding to an outer ring and the rotating side raceway member 3 corresponding to an inner ring so as to form a predetermined contact angle.

The fixed side raceway member 2 has a cylinder portion 6 in which two rows of outer ring raceway 6a are formed on an inner peripheral surface, and a flange portion 7 which is provided near a right end portion of the cylinder portion 6 and is attached to a suspension apparatus (a vehicle body) by bolts.

The rotating side raceway member 3 is constituted by a solid inner shaft 8, an inner ring 9 fitted to an inner ring fitting concave portion 8c formed in an inner portion in an axial direction of the inner shaft 8, and a flange portion 10 formed near an outer end portion in the axial direction of the inner shaft 8. A first inner ring raceway groove 8a is formed between the flange portion 10 and the inner ring fitting concave portion 8c, and a second inner ring raceway groove 9a is formed in the inner ring 9. A plurality of bolts 11 for attaching the wheel are fixed to the flange portion 10.

A concave portion 14 for weight saving is provided on an end surface on an outer side in the axial direction of the solid inner shaft 8, and the concave portion 14 has an end portion conical surface 15 forming an inner peripheral surface of a cylindrical end portion 8b of the inner shaft 8, an intersecting conical surface 16 connected to the end portion conical surface 15 and intersecting the direction of the contact angle of the balls 4, and a bottom surface 17 connected to the intersecting conical surface 16 and being approximately orthogonal to the axial direction. The end portion conical surface 15 and the intersecting conical surface 16 are joined by an R portion having a proper curvature, Further, the intersecting conical surface 16 and the bottom surface 17 are joined by an R portion having a proper curvature.

The end portion conical surface 15 is formed in a same manner as a conventional one in such a manner as to correspond to the specification of the wheel. The end portion side surface may be constituted by a cylindrical surface, or may be constituted by a part of a spherical surface. The intersecting conical surface 16 is set in such a manner that a prescribed strength is obtained and the concave portion 14 becomes as large as possible. The bottom surface 17 of the concave portion 14 is positioned closer to an inner side in the axial direction than a center position of the ball 4 on the outer side in the axial direction. The contact angle of the ball 4 is set to 35 degree, and an angle formed by the intersecting conical surface 16 with respect to an axial direction of the rolling bearing is set to 20 degree.

When determining a shape of the intersecting conical surface 16, the contact angle α (degree) of the ball 4 is first determined, several kinds of angles β (degree) formed by the intersecting conical surface 16 with respect to the axial direction of the rolling bearing are next selected within a range (α - 20 degrees) ≤ β ≤ (α + 10 degrees), a weight calculation and a strength calculation are further executed about these several kinds of angles, and the angle of the intersecting conical surface 16 is selected based on the results so as to make the hub unit lightest while having a necessary strength. As a reference for selecting several kinds of angles β, it is possible to employ a range (α - 15 degrees) ≤ β ≤ (α + 5 degrees). Accordingly, it is possible to obtain the hub unit for the driven wheel of the motor vehicle which is lightened while keeping the strength, by taking into consideration the contact angle of the ball 4 which is not at all considered at a time of designing the concave portion 14.

## Claims

1. A rolling bearing apparatus comprising:
a fixed side raceway member;
a rotating side raceway member; and
rolling elements arranged between both the members so as to form a predetermined contact angle; wherein
the rotating side raceway member has a solid portion;
a concave portion for weight saving is provided on an end surface of the solid portion, and
the concave portion is formed such that a surface intersecting a direction of a contact angle of the rolling element forms a conical surface.

2. The rolling bearing apparatus as claimed in claim 1, wherein an angle β formed by the conical surface with respect to an axial direction is set to a range, a contact angle of the rolling element being set to α, (α - 20 degrees) ≤ β ≤ (α + 10 degrees).

3. The rolling bearing apparatus as claimed in claim 1, wherein the rolling elements are arranged in two rows on an outer side and an inner side in an axial direction, the conical surface of the concave portion is formed so as to be tapered toward the inner side in the axial direction, and a bottom surface of the concave portion is positioned on the inner side in the axial direction than the rolling elements on the outer side in the axial direction.

4. The rolling bearing apparatus as claimed in claim 1, wherein the rolling bearing apparatus is formed as a hub unit for a driven wheel of a motor vehicle, a flange portion through which bolts for fixing the hub unit to a vehicle body are inserted is formed on the fixed side raceway member, and a flange portion to which bolts for attaching the wheel are fixed is formed on the rotating side raceway member.
